# EUROPÄISCHE PATENTANMELDUNG

(11) **EP 1 114 757 A2**
(43) Veröffentlichungstag der Anmeldung: **11.07.2001**
(21) Anmeldenummer: 00127519.7
(22) Anmeldetag: 15.12.2000
(51) Int. Cl.: B60R 21/01

(54) **Plausibilitätsprüfung von Luftdrucksensoren in Kraftfahrzeugen**

(30) Priorität: 08.01.2000 DE 10000534
(71) Anmelder: Bayerische Motoren Werke Aktiengesellschaft, 80809 München (DE)
(72) Erfinder: Schmidt, Robert, 81249 München (DE); Peller, Martin, 80796 München (DE)

(57) **Zusammenfassung**

Die Erfindung betrifft ein Kraftfahrzeug mit zumindest zwei Luftdrucksensoren, von denen einer im Motorsteuergerät angeordnet ist.

Zur Ermöglichung einer Plausibilitätsprüfung wird vorgeschlagen, daß eine Plausibilitäts-Einrichtung vorgesehen ist, die von den zumindest beiden Luftdrucksensoren jeweils ein Drucksignal zur Verfügung gestellt bekommt und diese zur Feststellung einer Fehlfunktion miteinander vergleicht.

## Beschreibung

Die Erfindung betrifft ein Kraftfahrzeug mit zumindest zwei Luftdrucksensoren zur Ermittlung des Umgebungsluftdruckes, von denen einer im Motorsteuergerät angeordnet ist.

Zur Detektion von Seitenkollisionen ist es bekannt, Luftdrucksensoren im Türbereich anzuordnen, die ein schlagartiges Ansteigen des Luftdrucks vom Umgebungsdruck über einen bestimmten Wert bei Eindringen eines Objektes in die Tür feststellen können. Diese Luftdrucksensoren sind Absolutmesser, die den relativen Luftdruck bestimmen.

Im Bereich der Motorelektronik ist es ebenfalls bekannt, einen Luftdrucksensor zu verwenden, der den Umgebungsdruck bestimmt. Dieser Parameter ist zur Beurteilung der Luftmassenmessung und damit zur Bestimmung der Sauerstoffsättigung und der Gemischaufbereitung notwendig.

Da es vorkommen kann, daß der eine oder andere Luftdrucksensor nun fehlerhaft arbeitet oder kein Signal abgibt, ist es von Vorteil, eine Plausibilitätsprüfung einzuführen. Insbesondere können die abgegebenen Druckwerte miteinander in Bezug gebracht werden.

Dies ist Aufgabe der vorliegenden Erfindung.

Die Aufgabe wird durch die im Anspruch 1 genannten Merkmale gelöst.

Demgemäß ist eine Plausibiläts-Einrichtung vorgesehen, die die Luftdrucksignale von den Luftdrucksensoren empfängt und miteinander vergleicht. Durch den Vergleich kann eine Fehlfunktion eines einzelnen Sensors festgestellt werden. Zum einen kann festgestellt werden, ob sich der Luftdruck außerhalb eines physikalisch nicht zulässigen Bereiches befindet. Zum anderen kann festgestellt werden - beispielsweise bei mehreren Drucksensoren - ob ein Druckwert verfälscht ist.

Gemäß einer vorteilhaften Ausführungsform sind mehrere Drucksensoren jeweils in zugeordneten Kraftfahrzeugtüren angeordnet. Die Drucksensoren können über einen Datenbus miteinander oder mit der Plausibilitäts-Einrichtung in Verbindung stehen. Werden mehrere Drucksensoren, beispielsweise mehrere Crash-Sensoren, verwendet und ergibt die Plausibilitäts-Prüfung, daß ein Drucksignal eines bestimmten Sensors nicht korrekt sein kann, so wird ein plausibel erscheinendes Drucksignals ausgewählt.

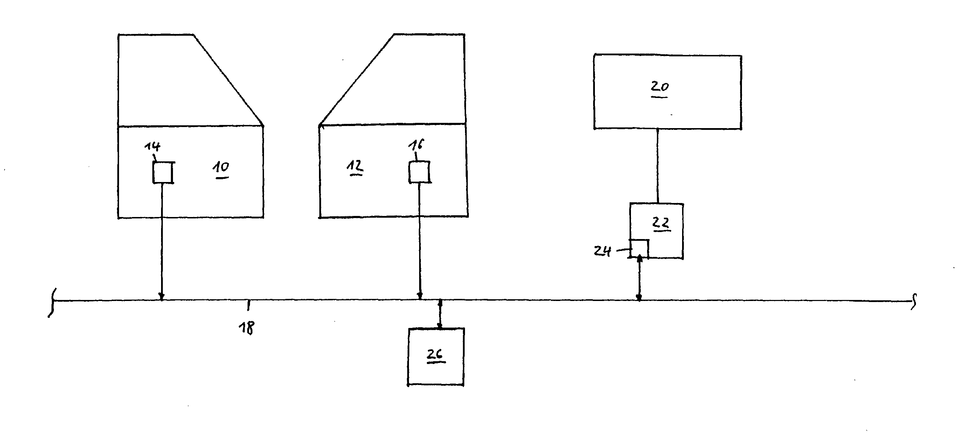

Die Erfindung wird nachfolgend anhand eines konkreten Ausführungsbeispiels näher beschrieben. Die einzige Zeichnung zeigt ein Blockschaltdiagramm in schematischer Darstellung.

In zwei verschiedenen und nur schematisch dargestellten Kraftfahrzeugtüren 10 und 12 ist jeweils ein Luftdrucksensor 14,16 zur Aufnahme des absoluten Umgebungsluftdruckes aufgenommen. Beide Luftdrucksensoren 14 und 16 stellen ihr Signal über einen Datenbus 18 einer Plausibilitäts-Einrichtung 26 zur Verfügung. Überdies ist in einer mit einem Motor 20 verbundenen Motorsteuerung 22 ein weiterer Luftdruckmesser 24 zur Bestimmung des Umgebungsluftdruckes vorgesehen. Auch dieser Luftdruckmesser 24 liefert sein Luftdrucksignal über den Datenbus 18 an die Plausibilitäts-Einrichtung 26 ab. Die Plausibilitäts-Einrichtung 26 vergleicht die Drucksignale der Drucksensoren 14,16 und 24 miteinander und entscheidet, welches Drucksignal als richtiges Drucksignal angenommen werden soll. Darüber hinaus kann beispielsweise ein fehlerhafter Drucksensor (z.B. in der Fahrzeugtür) diagnostiziert und stillgelegt werden. Ein als fehlerhaft diagnostizierter Drucksensor kann dann in verschiedenster Weise angezeigt werden, so daß ein Fahrzeugbediener eine Werkstatt aufsuchen kann.

Durch die vorliegende Erfindung wird die Sicherheit im Fahrzeug erhöht. Zum einen wird eine Fehlfunktion einer Sicherheitseinrichtung durch einen fehlerhaft funktionierenden Drucksensor in einer Fahrzeugtür ausgeschlossen. Zum anderen wird eine funktionssichere Arbeitsweise einer Motorsteuerung sichergestellt.

## Patentansprüche

1. Kraftfahrzeug mit zumindest zwei Luftdrucksensoren zur Bestimmung des Umgebungsluftdruckes, von denen einer im Motorsteuergerät angeordnet ist,
dadurch gekennzeichnet,
daß eine Plausibilitäts-Einrichtung vorhanden ist, die von den zumindest beiden Luftdrucksensoren jeweils ein Drucksignal zur Verfügung gestellt bekommt und diese zur Feststellung einer Fehlfunktion miteinander vergleicht.

2. Kraftfahrzeug nach Anspruch 1,
dadurch gekennzeichnet,
daß zumindest ein Luftdrucksensor in einer Kraftfahrzeugtür angeordnet ist.

3. Kraftfahrzeug nach Anspruch 1 oder 2,
dadurch gekennzeichnet,
daß zumindest ein Daten-Bus-System vorgesehen ist, über welches die Luftdrucksignale übertragen werden.

4. Kraftfahrzeug nach einem der vorhergehenden Ansprüche,
dadurch gekennzeichnet,
daß bei mehreren Luftdrucksensoren deren Signale in der Plausibilitäts-Einrichtung untereinander verglichen werden und ein Luftdrucksignal ausgewählt wird, welches plausibel erscheint.
